# EUROPEAN PATENT SPECIFICATION

(11) **EP 4 056 913 B1**
(45) Date of publication and mention of the grant of the patent: **23.08.2023**
(21) Application number: 20915972.2
(22) Date of filing: 03.11.2020
(51) Int. Cl.: F24F 5/00, F24F 6/04, F24F 13/20, F24F 13/24, F24F 6/00

(54) **EVAPORATIVE AIR COOLER**
VERDUNSTUNGSLUFTKÜHLER
REFROIDISSEUR D'AIR PAR ÉVAPORATION

(30) Priority: 20.01.2020 CN 202010069853
(43) Date of publication of application: 14.09.2022
(73) Proprietor: Gree Electric Appliances, Inc. of Zhuhai, Zhuhai, Guangdong 519070 (CN)
(72) Inventor: LEI, Mingjing, Zhuhai, Guangdong 519070 (CN); YANG, Kangyun, Zhuhai, Guangdong 519070 (CN); ZHANG, Yihong, Zhuhai, Guangdong 519070 (CN); LIANG, Guiming, Zhuhai, Guangdong 519070 (CN); YANG, Lijing, Zhuhai, Guangdong 519070 (CN); HUANG, Xuezhen, Zhuhai, Guangdong 519070 (CN); YANG, Dehao, Zhuhai, Guangdong 519070 (CN); LIU, Chen, Zhuhai, Guangdong 519070 (CN); BAI, Jiandong, Zhuhai, Guangdong 519070 (CN)
(74) Representative: Noble, Nicholas
(86) International application number: PCT/CN2020/126054
(87) International publication number: WO 2021/147447

(56) References cited:
- CN-A- 105 546 699
- CN-A- 106 016 530
- CN-A- 108 731 167
- CN-A- 111 140 958
- CN-A- 111 140 962
- CN-A- 111 140 971
- CN-A- 111 140 972
- CN-A- 111 140 973
- CN-A- 111 156 630
- CN-U- 206 257 765
- CN-U- 209 246 291
- CN-U- 211 451 242
- CN-U- 211 451 244
- CN-U- 211 503 103
- CN-U- 211 739 372
- CN-U- 211 739 374
- CN-U- 211 739 378
- DE-U1-202019 100 292
- JP-A- 2014 214 918
- US-A- 4 031 180
- US-A1- 2019 277 519

## Description

### TECHNICAL FIELD

The present application relates to the field of household appliance technology, and particularly to an evaporative air cooler.

### BACKGROUND

The working principle of the evaporative air cooler is that a wet curtain is installed at an air inlet of the evaporative air cooler, and a water dividing structure is arranged above the wet curtain. The bottom portion of the water dividing structure is provided with a water outlet, and the water is transported onto the wet curtain through the water outlet. The wet curtain can absorb water and increase the contact area between the water and air, thereby increasing the evaporation of water on the wet curtain and reducing the temperature of the air entering from the air inlet, in order to achieve the purpose of transporting cold air with a lower temperature to the surrounding environment.

However, since the wet curtain is an additional functional component, even if the user forgets to install the wet curtain after dismantling for maintenance, or the user does not need cold air with a lower temperature and does not want to install the wet curtain, the fan of the evaporative air cooler can still operate and supply air to the surrounding environment. However, after the wet curtain is removed, the water dividing structure still supplies water to the position where the wet curtain is located, resulting in that there is no water-absorbing component the evaporative air cooler, and the dripping water sputters in the evaporative air cooler and sputters onto other electrical components, which results in electrical safety hazards. An exemplary evaporative cooler according to the preamble of claim 1 is known from patent document CN-108731167.

### SUMMARY

In view of this, the technical problem to be solved by the present application is to overcome the defect that the evaporative air cooler in the related art has potential electrical safety hazards when the wet curtain is not mounted, so that an evaporative air cooler is provided, which can still avoid electrical safety hazards when the wet curtain is not mounted.

An evaporative air cooler is provided, including:
a housing, which is provided with a receiving cavity having an opening, wherein the receiving cavity is adapted to assemble a wet curtain;
a water dividing structure, provided above the receiving cavity;
a water catcher, which is movably provided on an inner wall of the receiving cavity, the water catcher including a water catching cavity with an opening facing the water dividing structure, the water catching cavity having a water-catching state directly under the water dividing structure when the wet curtain is unassembled in the receiving cavity, and a non-water-catching state obliquely under the water dividing structure when the wet curtain is assembled in the receiving cavity.

In some embodiments, the water catcher is rotatably connected to the inner wall.

In some embodiments, a center of gravity of the water catcher is located on a side of the water catching cavity adjacent to the wet curtain;
the evaporative air cooler further includes at least one limiting structure which is provided on inner walls of the housing and the receiving cavity and is adapted to limit a rotation angle of a side of the water catcher away from the center of gravity and a rotation angle of the center of gravity side of the water catcher.

In some embodiment, the center of gravity of the water catcher is located on a side of the water catching cavity adjacent to the wet curtain;

the evaporative air cooler further includes at least one limiting structure which is provided on an inner wall of the housing and is adapted to limit a rotation angle of a side of the water catcher away from the center of gravity.

In some embodiments, the center of gravity of the water catcher is located on a side of the water catching cavity adjacent to the wet curtain;

the evaporative air cooler further includes at least one limiting structure which is provided on an inner wall of the housing and is adapted to limit a rotation angle of the center of gravity side of the water catcher.

In some embodiments, the center of gravity of the water catcher is located on a side of the water catching cavity adjacent to the wet curtain;

the evaporative air cooler further includes at least one limiting structure which is provided on an inner wall of the receiving cavity and is adapted to limit a rotation angle of a side of the water catcher away from the center of gravity.

In some embodiments, the center of gravity of the water catcher is located on a side of the water catching cavity adjacent to the wet curtain;
the evaporative air cooler further includes at least one limiting structure which is provided on an inner wall of the receiving cavity and is adapted to limit a rotation angle of the center of gravity side of the water catcher.

In some embodiments, both ends of the water catcher are rotatably connected to the inner wall.

In some embodiments, both sides of the inner wall are each provided with at least one positioning hole or one rotating shaft, and the water catcher is provided with a rotating shaft or a positioning hole which is matched with and connected to the positioning hole or the rotating shaft.

In some embodiments, the rotating shaft is provided on a side of the water catcher away from the center of gravity.

In some embodiments, the rotating shaft on at least one side has an elastic structure.

In some embodiments, the water catcher is slidably connected to the inner wall.

In some embodiments, the evaporative air cooler further includes:
an elastic member, one end of which is provided on the housing, and the other end is connected to a side of the water catcher away from the wet curtain, the water catcher being in the water-catching state when the elastic member is in a uncompressed state.

In some embodiments, a slideway is provided on one of the inner wall and the water catcher, and a sliding shaft that moves along the slideway is provided on the other one of the inner wall and the water catcher.

In some embodiments, a connecting column configured to connect the elastic member is provided on the water catcher.

In some embodiments, a bottom portion of the water catching cavity is provided with an outlet which is adapted to drain water in the water catching cavity out of the housing.

In some embodiments, the evaporative air cooler further includes:
a drainage structure, which communicates with the outlet and is adapted to drain the water out of the housing.

In some embodiments, the drainage structure is a drainage groove provided on the housing.

In some embodiments, the evaporative air cooler further includes: a dust screen fixedly connected to the housing and located at the opening of the receiving cavity adjacent to the wet curtain.

The technical solution of the present invention has following advantages:
1. In the evaporative air cooler provided by the present application, a receiving cavity is provided on the housing, and a wet curtain and a water catcher are mounted in the receiving cavity. When the user needs the lower temperature air and the wet curtain operates, the wet curtain is located directly under the water dividing structure, the water catcher is located obliquely under the water dividing structure; the water catcher and the wet curtain do not interfere. The wet curtain cools the air before supplying it to the user; when the user does not need the power temperature air or forgets to mount the wet curtain, the water catching cavity of the water catcher can be arranged directly under the water dividing structure to catch and store the water out of the water dividing structure in the water catching cavity, thereby preventing the water from sputtering inside the evaporative air cooler when the wet curtain is not mounted, and avoiding potential safety hazards when water sputters onto electrical components, and meanwhile avoiding the problem of larger noise caused by the water sputtering inside the evaporative air cooler, and accordingly the user experience is improved.

In the evaporative air cooler provided by the present application, the center of gravity of the water catcher is arranged on the side of the water catching cavity adjacent to the wet curtain, since the center of gravity of the water catcher is offset onto the center of gravity side, the center of gravity automatically rotate downward; the limiting structure is provided on the inner wall of the housing and/or the receiving cavity, which can limit the rotation angle of the water catcher, so that the water catching cavity can be located directly under the water dividing structure and in a water-catching state, thereby preventing the water catcher from rotating excessively and affecting the water catching effect; at the same time, because the water catcher can be in the water-catching state only by its own structure without needing to provide other additional structures, the overall structure of the evaporative air cooler is simpler, and the defect of increasing energy consumption caused by arranging an additional driving structure is avoided.

3. In the evaporative air cooler provided by the present application, both ends of the water catcher can be rotatably connected to the inner wall, so that the rotation of the water catcher is more stable and the movement stability is improved.

4. In the evaporative air cooler provided by the present application, by arranging the positioning holes and rotating shafts what are matched and connected on both sides of the inner wall of the receiving cavity and the water catcher, the water catcher can rotate relative to the receiving cavity, the structure is simpler.

5. In the evaporative air cooler provided by the present application, by arranging the rotating shaft on the side of the water catcher away from the center of gravity, the water catcher is relatively labor-saving when rotating toward the center of gravity.

6. In the evaporative air cooler provided by the present application, by arranging the rotating shaft on at least one side as an elastic structure, the rotating shaft of the water catcher can be elastically deformed when the water catcher is mounted, which is convenient for assembly.

7. In the evaporative air cooler provided by the present application, by arranging the elastic member, and the water catcher is stretched and retracted under the elastic force of the elastic member to implement the water-catching state and the non-water-catching state, so that the sliding structure of the water catcher is simpler.

8. In the evaporative air cooler provided by the present application, by arranging the slideway and sliding shaft that cooperate with each other on the inner wall and the water catcher, the sliding of the water catcher is more stable.

9. In the evaporative air cooler provided by the present application, by arranging a connecting column connecting the elastic member on the water catcher, the assembly of the water catcher and the elastic member is more convenient, and the assembly efficiency is improved.

10. In the evaporative air cooler provided by the present application, by arranging the outlet at the bottom portion of the water catcher, the water in the water catching cavity can be drained out of the housing, thereby preventing the water from overflowing into the housing when the water catching cavity is full and causing a potential safety hazard.

11. In the evaporative air cooler provided by the present application, by arranging the drainage structure, a better drainage effect on the water is obtained when the water in the water catcher is transported to the outside of the housing, and accordingly the transportation effect is improved.

12. In the evaporative air cooler provided by the present application, by arranging the drainage structure as a drainage groove on the housing, the structure is simpler and a less space is occupied, so that the overall volume of the evaporative air cooler is smaller.

13. In the evaporative air cooler provided by the present application, by fixing and connecting the dust screen on the housing, and the dust screen is located at the opening of the receiving cavity adjacent to the wet curtain, the air entering the wet curtain can be filtered and the cleanliness of the air outputted can be improved.

### BRIEF DESCRIPTION OF THE DRAWINGS

In order to more clearly illustrate the technical solution in the specific embodiments of the present invention or related technologies, the accompanying drawings that need to be used in the description of the specific embodiments or related technologies are briefly introduced. Obviously, the accompanying drawings in the following description are some embodiments of the present invention, those of ordinary skill in the art can obtain other drawings from these drawings without creative efforts.
FIG. 1 is an exploded view of a partial structure of an evaporative air cooler according to the present application.
FIG. 2 is an assembly completion diagram of a partial structure of an evaporative air cooler according to the present application.
FIG. 3 is an exploded view of a partial structure of an evaporative air cooler according to the present application.
FIG. 4 is a schematic structure diagram of a water catcher according to the present application.
FIG. 5 is a schematic structure diagram of a housing according to the present application.
FIG. 6 is a cross-sectional view of a partial structure of an evaporative air cooler assembled with a wet curtain according to the present application.
FIG. 7 is a cross-sectional view of a partial structure of an evaporative air cooler without a wet curtain according to the present application.

### Description of reference signs:

1, housing; 2, receiving cavity; 3, water dividing structure; 4, water catcher; 5, positioning hole; 6, rotating shaft; 7, limiting block; 8, outlet; 9, drainage groove; 10, fan; 11, dust screen; 12, wet curtain; 13, water chamber; 14, top cover.

### DETAILED DESCRIPTION

The technical solution of the present application will be clearly and completely described below with reference to the accompanying drawings. Obviously, the described embodiments are some embodiments of the present invention, but not all of the embodiments. Based on the embodiments in the present invention, all other embodiments obtained by those of ordinary skill in the art without creative efforts shall fall within the protection scope of the present invention.

In addition, technical features involved in different embodiments of the present invention described below can be combined with each other as long as these features do not conflict with each other.

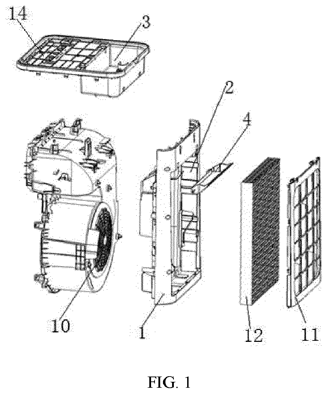

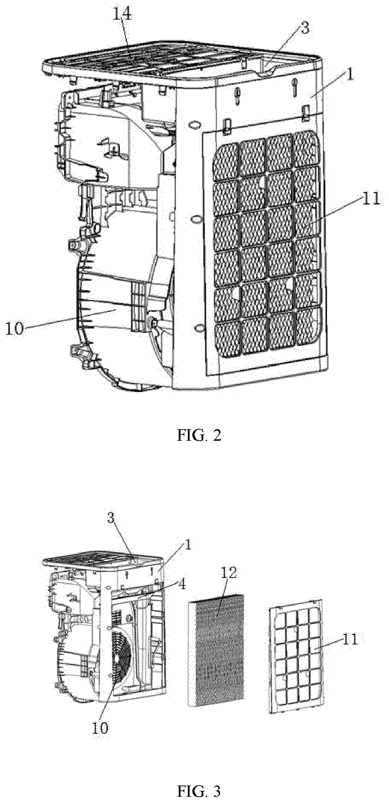

As shown in FIGS. 1 to 7, an evaporative air cooler is provided in the embodiment, including: a housing 1, a water dividing structure 3 and a water catcher 4.

The housing 1 is provided with a receiving cavity 2 having an opening, and the receiving cavity 2 is adapted to assemble a wet curtain 12. The water dividing structure 3 is connected to a top cover 14 of the evaporative air cooler, and is disposed above the receiving cavity 2. The water catcher 4 is movably arranged on an inner wall of the receiving cavity 2; and the water catcher 4 includes a water catching cavity 13 with an opening facing the water dividing structure 3; the water catching cavity 13 has a water-catching state directly under the water dividing structure 3 when the wet curtain is unassembled in the receiving cavity 2, and a non-water-catching state obliquely under the water dividing structure 3 when the wet curtain 12 is assembled in the receiving cavity 2.

By arranging the receiving cavity 2 on the housing 1, the wet curtain 12 and the water catcher 4 are assembled in the receiving cavity 2; when the user needs a lower temperature air and the wet curtain 12 operates, the wet curtain 12 is located directly under the water dividing structure 3, and the water catcher 4 is located obliquely under the water dividing structure 3; the water catcher 4 and the wet curtain 12 do not interfere; the wet curtain 12 cools the air before supplying it to the user. When the user does not need the lower temperature air or forgets to mount the wet curtain 12, the water catching cavity 13 of the water catcher 4 can be arranged directly under the water dividing structure 3 to receive and store the water flowing out of the water dividing structure 3, thereby preventing the water from sputtering inside the evaporative air cooler when the wet curtain 12 is unassembled, which avoids the potential safety hazard when the water sputters to the electrical components, and meanwhile avoids the problem of larger noise caused by the water sputtering inside the evaporative air cooler, and accordingly the user experience is improved.

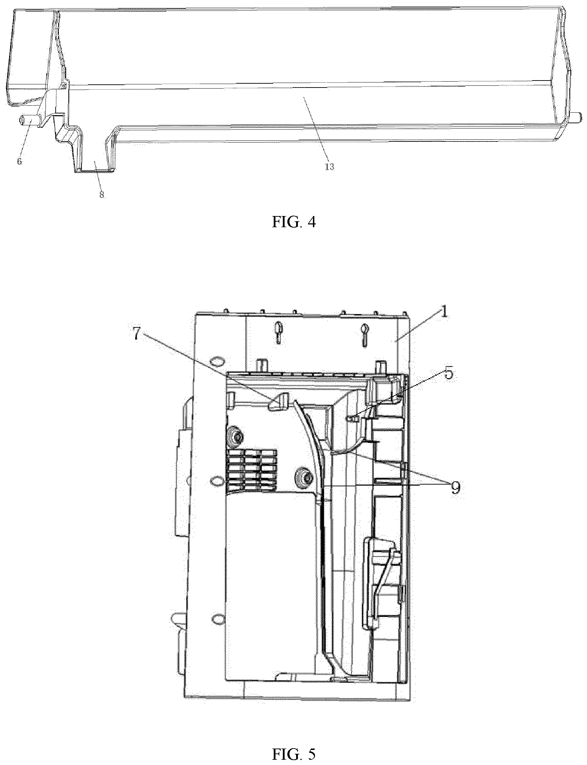

Specifically, the water catcher 4 in the embodiment is rotatably connected to the inner wall. A center of gravity of the water catcher 4 in the embodiment is located on a side of the water catching cavity 13 adjacent to the wet curtain 12. As shown in FIG. 5, the evaporative air cooler further includes two limiting blocks 7 which are arranged on a top wall of the receiving cavity 2 and are adapted to limit a rotation angle of a side of the water catcher 4 away from the center of gravity. By arranging the center of gravity of the water catcher 4 on the side of the water catching cavity 13 adjacent to the wet curtain 12, since the center of gravity of the water catcher 4 is offset onto the center of gravity side, the center of gravity side automatically rotates downwards. By arranging the limiting blocks 7 on the top wall of the receiving cavity 2, the rotation angle of the water catcher 4 can be limited, so that the water catching cavity 13 can be located directly under the water dividing structure 3 in a water-catching state, thereby preventing the water catcher 4 from rotating excessively and affecting the water catching effect. Meanwhile, since the water catcher 4 can be in the water catching state only by its own structure, without additionally arranging other structures, the overall structure of the evaporative air cooler is simpler, and the defect of increasing energy consumption caused by arranging an additional driving structure is avoided. As an alternative embodiment, it is also possible that the structure of the water catcher 4 is uniformly arranged, and the center of gravity is located at a center of the water catcher 4; and the water catcher 4 is arranged in the water-catching state or the non-water-catching state by an action of an external force. For example, the user can manually rotate the water catcher 4, or use a motor to directly drive the water catcher 4 to rotate. As an alternative embodiment, the limiting structure may also be a limiting column, or other forms of structures, and the specific number can be set according to actual requirements, which will not be repeated here. As an alternative embodiment, the limiting structure may also be arranged on the housing 1, or both the housing 1 and the inner wall of the receiving cavity 2 are provided with limiting structures. As an alternative embodiment, the limiting structure may also limit the rotation angle of the water catcher 4 on the center of gravity side, or the limiting structure may simultaneously limit the rotation angles of the water catcher 4 on both the center of gravity side and the non-center of gravity side.

Both ends of the water catcher 4 in the embodiment are rotatably connected to the inner wall. By connecting both ends of the water catcher 4 to the inner wall in the rotatable manner, the rotation of the water catcher 4 is more stable, and the stability of movement is improved. As an alternative embodiment, the water catcher 4 can also be made of a material with a greater strength, so that one end of the water catcher 4 is rotatably connected to the inner wall of one side, and the other end is not connected to the inner wall of the other side.

As shown in FIG. 4, in order to implement the stable rotation of both ends of the water catcher 4, both sides of the inner wall are respectively provided with a positioning hole 5 in the embodiment; and two sides of the water catcher 4 are respectively provided with a rotating shaft 6 which is matched with and connected to the positioning hole 5. In the present embodiment, the material of the rotating shaft 6 is not limited. As a preferred embodiment, the rotating shaft 6 can have an elastic structure, so that the rotating shaft 6 can have an elastic deformation when the water catcher 4 is mounted, to facilitate the assembly. Specifically, the rotating shaft 6 can be made of a rubber material. By arranging positioning holes 5 and rotating shafts 6 which are matched and connected with each other on both sides of the inner wall of the receiving cavity 2 and the water catcher 4, the water catcher 4 can rotate relative to the receiving cavity 2, and the structure is simpler. As an alternative embodiment, the positioning hole may be arranged on the water catcher 4, and the rotating shaft may be arranged on the inner wall. As an alternative embodiment, a plurality of positioning holes 5 and a plurality of rotating shafts 6 are arranged. As an alternative embodiment, the inner wall is directly hinged with the water catcher 4. As an alternative embodiment, the rotating shafts on both sides have elastic structures, or the rotating shafts on both sides have inelastic structures.

In order to save effort when the water catcher 4 rotates toward the center of gravity, the rotating shaft 6 in the embodiment is provided on the side of the water catcher 4 away from the center of gravity. As an alternative embodiment, the rotating shaft 6 is provided at other positions on the water catcher 4.

As an alternative embodiment, the water catcher 4 can also be slidably connected to the inner wall. For example, the evaporative air cooler further includes an elastic member. One end of the elastic member is arranged on the housing 1, and the other end is connected to the side of the water catcher 4 away from the wet curtain 12. When the elastic member is in a uncompressed state, the water catcher 4 is in the water-catching state. By arranging the elastic member, the water catcher 4 is stretched and retracted under the elastic force of the elastic member to implement the water-catching state and the non-water-catching state, so that the sliding structure of the water catcher 4 is simpler. In order to facilitate the assembly of the elastic member, the water catcher 4 is also provided with a connecting column configured to connect the elastic member. In order to enable the sliding of the water catcher 4 to be more stable, a slideway can be provided on one of the inner wall and the water catcher 4, and a sliding shaft that moves along the slideway is arranged on the other one of the inner wall and the water catcher 4. Of course, It is also possible not to provide the slideway and sliding shaft.

As shown in FIG. 4, a bottom of the water catching cavity 13 in the embodiment is provided with an outlet 8, which is adapted to drain the water in the water catching cavity 13 out of the housing 1. By arranging the outlet 8 at the bottom of the water catcher 4, the water in the water catching chamber 13 can be drained out of the housing 1, thereby preventing the water from overflowing into the housing 1 when the water catching chamber 13 is full and causing a safety hazard. As an alternative embodiment, no outlet 8 is provided, but the water in the water catching chamber 13 is manually drained out of the housing 1 periodically.

In order to facilitate the drainage of water, the evaporative air cooler in this embodiment further includes a drainage structure, and the drainage structure communicates with the outlet 8 and is adapted to drain the water to the outside of the housing 1. By arranging the drainage structure, when the water in the water catcher 4 is transported to the outside of the housing 1, the drainage structure can have a better drainage effect on the water, and the transport effect is improved. Specifically, as shown in FIG. 5, the drainage structure in this embodiment is a drainage groove 9 provided on the housing 1. By arranging the drainage structure as the drainage groove 9 provided on the housing 1, the structure is simpler, and the occupied space is smaller, so that the overall volume of the evaporative air cooler is smaller. As an alternative embodiment, the drainage structure can also be a water conduit, which directly leads from the water catcher 4 to the outside of the housing 1.

The evaporative air cooler in this embodiment further includes a dust screen 11, which is fixedly connected to the housing 1 and located at the opening of the receiving cavity 2 adjacent to the wet curtain 12. By fixing and connecting the dust screen 11 on the housing 1, and arranging the dust screen at the opening of the receiving cavity 2 adjacent to the wet curtain 12, the air entering the wet curtain 12 can be filtered, and the cleanliness of the air outputted can be improved. As an alternative embodiment, the dust screen 11 may not be provided.

When the evaporative air cooler is assembled, the housing 1 can be fixed on an air duct of the evaporative air cooler by screws first, then the top cover 14 is fixed on the air duct and the housing 1 respectively; and then when the water catcher 4 is assembled onto the housing 1, a rotating shaft 6 of a non-elastic structure of the water catcher 4 is first inserted into the positioning hole 5 on a side of the housing 1. Since a rotating shaft 6 at the other end of the water catcher 4 is an elastic structure, the water catcher 4 can be assembled into the positioning hole 5 on the other side of the rear of the housing; because the center of gravity of the water catcher 4 is on the outside, when there is no external force, the water catcher 4 rotates outward. The limiting block 7 arranged on the housing 1 can ensure the rotation angle of the water catcher 4, so that the water catcher 4 is always in the water-catching state. When it is required to assemble the set curtain 12 onto the housing 1, the water catcher 4 rotates and is closed to the non-water-catching state, and finally the dust screen 11 is assembled to fix the wet curtain 12, accordingly, the assembly is completed.

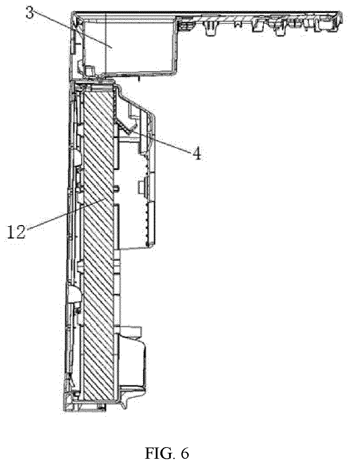

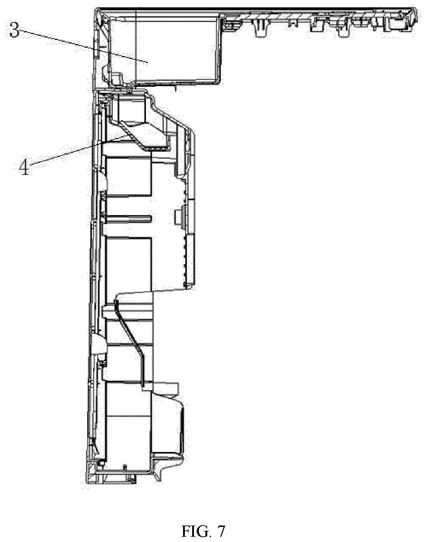

As shown in FIG. 6, when the user needs the lower temperature air, the water flows down from the water dividing structure 3 on the top cover 14; and when the water falls to the wet curtain 12, the wet curtain 12 is wetted, and the fan 10 in the air duct operates to evaporate the water. As shown in FIG. 7, when the user does not need the lower temperature air and does not mount the wet curtain 12, or the user forgets to mount the wet curtain 12, the water catcher 4 rotates outward to the water-catching state, and the water flows down from the water dividing structure 3 on the top cover 14 and directly flows into the water catching cavity 13 of the water catcher 4, and then the water flows out from the water outlet opened at the bottom of the water catching cavity 13. Meanwhile, the corresponding position on the housing 1 is provided with the drainage groove 9 draining the flow downward to prevent the water from splashing, thereby avoiding the phenomenon of splashing of the water and flying of the water into the motor, improving the quality of the product, and improving the user experience.

Obviously, the above-mentioned embodiments are only examples for clear description, and are not intended to limit the implementation manner. Those of ordinary skill in the art can make variations or modifications in other different forms on the basis of the above description. There is no need and it is impossible to exhaust all embodiments here. However, the obvious variations or modifications derived from this are still within the protection scope of the present invention which is defined by the appended claims only.

## Claims

1. An evaporative air cooler, comprising:
a housing (1), which is provided with a receiving cavity (2) having an opening, wherein the receiving cavity (2) is adapted to assemble a wet curtain (12); and
a water dividing structure (3), provided above the receiving cavity (2);
the evaporative air cooler being **characterized by** further comprising a water catcher (4), which is movably provided on an inner wall of the receiving cavity (2), wherein the water catcher (4) comprises a water catching cavity (13) with an opening facing the water dividing structure (3), the water catching cavity (13) has a water-catching state directly under the water dividing structure (3) when the wet curtain (12) is unassembled in the receiving cavity (2), and a non-water-catching state obliquely under the water dividing structure (3) when the wet curtain (12) is assembled in the receiving cavity (2).

2. The evaporative air cooler according to claim 1, wherein the water catcher (4) is rotatably connected to the inner wall.

3. The evaporative air cooler according to claim 2, wherein a center of gravity of the water catcher (4) is located on a side of the water catching cavity (13) adjacent to the wet curtain (12);
the evaporative air cooler further comprises at least one limiting structure which is provided on inner walls of the housing (1) and the receiving cavity (2) and is adapted to limit a rotation angle of a side of the water catcher (4) away from the center of gravity and a rotation angle of the center of gravity side of the water catcher (4).

4. The evaporative air cooler according to claim 2, wherein the center of gravity of the water catcher (4) is located on a side of the water catching cavity (13) adjacent to the wet curtain (12);
the evaporative air cooler further comprises at least one limiting structure which is provided on an inner wall of the housing (1) and is adapted to limit a rotation angle of a side of the water catcher (4) away from the center of gravity.

5. The evaporative air cooler according to claim 2, wherein the center of gravity of the water catcher (4) is located on a side of the water catching cavity (13) adjacent to the wet curtain (12);
the evaporative air cooler further comprises at least one limiting structure which is provided on an inner wall of the housing (1) and is adapted to limit a rotation angle of the center of gravity side of the water catcher (4).

6. The evaporative air cooler according to claim 2, wherein the center of gravity of the water catcher (4) is located on a side of the water catching cavity (13) adjacent to the wet curtain (12);
the evaporative air cooler further comprises at least one limiting structure which is provided on an inner wall of the receiving cavity (2) and is adapted to limit a rotation angle of a side of the water catcher (4) away from the center of gravity.

7. The evaporative air cooler according to claim 2, wherein the center of gravity of the water catcher (4) is located on a side of the water catching cavity (13) adjacent to the wet curtain (12);
the evaporative air cooler further comprises at least one limiting structure which is provided on an inner wall of the receiving cavity (2) and is adapted to limit a rotation angle of the center of gravity side of the water catcher (4).

8. The evaporative air cooler according to claim 2, wherein both ends of the water catcher (4) are rotatably connected to the inner wall;
wherein both sides of the inner wall are each provided with at least one positioning hole (5) or one rotating shaft, and the water catcher (4) is provided with a rotating shaft (6) or a positioning hole which is matched with and connected to the positioning hole (5) or the rotating shaft;
wherein the rotating shaft (6) is provided on a side of the water catcher (4) away from the center of gravity.

9. The evaporative air cooler according to claim 8, wherein the rotating shaft (6) on at least one side has an elastic structure.

10. The evaporative air cooler according to claim 1, wherein the water catcher (4) is slidably connected to the inner wall;
wherein a slideway is provided on one of the inner wall and the water catcher (4), and a sliding shaft that moves along the slideway is provided on the other one of the inner wall and the water catcher (4).

11. The evaporative air cooler according to claim 10, further comprising:
an elastic member, one end of which is provided on the housing (1), and the other end is connected to a side of the water catcher (4) away from the wet curtain (12), the water catcher (4) being in the water-catching state when the elastic member is in a uncompressed state;
wherein a connecting column configured to connect the elastic member is provided on the water catcher (4).

12. The evaporative air cooler according to any one of claims 1 to 11, wherein a bottom portion of the water catching cavity (13) is provided with an outlet (8) which is adapted to drain water in the water catching cavity (13) out of the housing (1).

13. The evaporative air cooler according to claim 12, further comprising:
a drainage structure, which communicates with the outlet (8) and is adapted to drain the water out of the housing (1).

14. The evaporative air cooler according to claim 13, wherein the drainage structure is a drainage groove (9) provided on the housing (1).

15. The evaporative air cooler according to any one of claims 1 to 11, further comprising: a dust screen (11) fixedly connected to the housing (1) and located at the opening of the receiving cavity (2) adjacent to the wet curtain (12).

## Patentansprüche

1. Verdunstungsluftkühler, umfassend:
ein Gehäuse (1), das mit einem Aufnahmehohlraum (2), der eine Öffnung aufweist, versehen ist, wobei der Aufnahmehohlraum (2) angepasst ist, einen nassen Vorhang (12) aufzubauen; und
eine Wasser teilende Struktur (3), bereitgestellt über dem Aufnahmehohlraum (2);
wobei der Verdunstungsluftkühler **dadurch gekennzeichnet ist, dass** er ferner umfasst
einen Wasserfänger (4), der an einer inneren Wand des Aufnahmehohlraums (2) bewegbar bereitgestellt ist, wobei der Wasserfänger (4) einen Wasser auffangenden Hohlraum (13) mit einer Öffnung, die zu der Wasser teilenden Struktur (3) weist, umfasst, wobei der Wasser auffangende Hohlraum (13) einen Wasser auffangenden Zustand direkt unter der Wasser teilenden Struktur (3), wenn der nasse Vorhang (12) in dem Aufnahmehohlraum (2) nicht aufgebaut ist, und einen nicht Wasser auffangenden Zustand schräg unter der Wasser teilenden Struktur (3), wenn der nasse Vorhang (12) in dem Aufnahmehohlraum (2) aufgebaut ist, aufweist.

2. Verdunstungsluftkühler nach Anspruch 1, wobei der Wasserfänger (4) mit der inneren Wand drehbar verbunden ist.

3. Verdunstungsluftkühler nach Anspruch 2, wobei ein Schwerpunkt des Wasserfängers (4) sich an einer Seite des Wasser auffangenden Hohlraums (13) angrenzend an dem nassen Vorhang (12) befindet;
der Verdunstungsluftkühler ferner mindestens eine begrenzende Struktur umfasst, die an inneren Wänden des Gehäuses (1) und des Aufnahmehohlraums (2) bereitgestellt ist und angepasst ist, einen Drehwinkel einer Seite des Wasserfängers (4) weg von dem Schwerpunkt und einen Drehwinkel der Schwerpunktseite des Wasserfängers (4) zu begrenzen.

4. Verdunstungsluftkühler nach Anspruch 2, wobei der Schwerpunkt des Wasserfängers (4) sich an einer Seite des Wasser auffangenden Hohlraums (13) angrenzend an dem nassen Vorhang (12) befindet;
der Verdunstungsluftkühler ferner mindestens eine begrenzende Struktur umfasst, die an einer inneren Wand des Gehäuses (1) bereitgestellt ist und angepasst ist, einen Drehwinkel einer Seite des Wasserfängers (4) weg von dem Schwerpunkt zu begrenzen.

5. Verdunstungsluftkühler nach Anspruch 2, wobei der Schwerpunkt des Wasserfängers (4) sich an einer Seite des Wasser auffangenden Hohlraums (13) angrenzend an dem nassen Vorhang (12) befindet;
der Verdunstungsluftkühler ferner mindestens eine begrenzende Struktur umfasst, die an einer inneren Wand des Gehäuses (1) bereitgestellt ist und angepasst ist, einen Drehwinkel der Schwerpunktseite des Wasserfängers (4) zu begrenzen.

6. Verdunstungsluftkühler nach Anspruch 2, wobei der Schwerpunkt des Wasserfängers (4) sich an einer Seite des Wasser auffangenden Hohlraums (13) angrenzend an dem nassen Vorhang (12) befindet;
der Verdunstungsluftkühler ferner mindestens eine begrenzende Struktur umfasst, die an einer inneren Wand des Aufnahmehohlraums (2) bereitgestellt ist und angepasst ist, einen Drehwinkel einer Seite des Wasserfängers (4) weg von dem Schwerpunkt zu begrenzen.

7. Verdunstungsluftkühler nach Anspruch 2, wobei der Schwerpunkt des Wasserfängers (4) sich an einer Seite des Wasser auffangenden Hohlraums (13) angrenzend an dem nassen Vorhang (12) befindet;
der Verdunstungsluftkühler ferner mindestens eine begrenzende Struktur umfasst, die an einer inneren Wand des Aufnahmehohlraums (2) bereitgestellt ist und angepasst ist, einen Drehwinkel der Schwerpunktseite des Wasserfängers (4) zu begrenzen.

8. Verdunstungsluftkühler nach Anspruch 2, wobei beide Enden des Wasserfängers (4) mit der inneren Wand drehbar verbunden sind;
wobei beide Seiten der inneren Wand jeweils mit mindestens einem Positionierungsloch (5) oder einer drehenden Welle versehen sind und der Wasserfänger (4) mit einer drehenden Welle (6) oder einem Positionierungsloch, die/das mit dem Positionierungsloch (5) oder der drehenden Welle abgestimmt und verbunden ist, versehen ist;
wobei die drehende Welle (6) an einer Seite des Wasserfängers (4) weg von dem Schwerpunkt bereitgestellt ist.

9. Verdunstungsluftkühler nach Anspruch 8, wobei die drehende Welle (6) an mindestens einer Seite eine elastische Struktur aufweist.

10. Verdunstungsluftkühler nach Anspruch 1, wobei der Wasserfänger (4) mit der inneren Wand gleitfähig verbunden ist;
wobei eine Gleitbahn an einem der inneren Wand und des Wasserfängers (4) bereitgestellt ist und eine gleitende Welle, die sich entlang der Gleitbahn bewegt, an dem anderen der inneren Wand und des Wasserfängers (4) bereitgestellt ist.

11. Verdunstungsluftkühler nach Anspruch 10, ferner umfassend:
ein elastisches Glied, dessen eines Ende an dem Gehäuse (1) bereitgestellt ist und dessen anderes Ende mit einer Seite des Wasserfängers (4) weg von dem nassen Vorhang (12) verbunden ist, wobei der Wasserfänger (4) in dem Wasser auffangenden Zustand ist, wenn das elastische Glied in einem nicht komprimierten Zustand ist;
wobei eine Verbindungssäule, konfiguriert zum Verbinden des elastischen Glieds, an dem Wasserfänger (4) bereitgestellt ist.

12. Verdunstungsluftkühler nach einem der Ansprüche 1 bis 11, wobei ein unterer Abschnitt des Wasser auffangenden Hohlraums (13) mit einem Auslass (8) versehen ist, der angepasst ist, Wasser in dem Wasser auffangenden Hohlraum (13) aus dem Gehäuse (1) abzuleiten.

13. Verdunstungsluftkühler nach Anspruch 12, ferner umfassend:
eine Ableitungsstruktur, die mit dem Auslass (8) kommuniziert und angepasst ist, Wasser aus dem Gehäuse (1) abzuleiten.

14. Verdunstungsluftkühler nach Anspruch 13, wobei die Ableitungsstruktur eine Ableitungsrille (9) ist, die an dem Gehäuse (1) bereitgestellt ist.

15. Verdunstungsluftkühler nach einem der Ansprüche 1 bis 11, ferner umfassend: einen Staubschirm (11), der fest mit dem Gehäuse (1) verbunden ist und sich an der Öffnung des Aufnahmehohlraums (2) angrenzend an dem nassen Vorhang (12) befindet.

## Revendications

1. Refroidisseur d'air par évaporation, comprenant un boîtier (1), qui est muni d'une cavité réceptrice (2) dotée d'une ouverture, la cavité réceptrice (2) étant prévue pour monter un rideau humide (12) ; et
une structure (3) de répartition d'eau, placée au-dessus de la cavité réceptrice (2) ;
le refroidisseur d'air par évaporation étant **caractérisé en ce qu'**il comprend en outre
un récupérateur (4) d'eau, qui est placé de façon mobile sur une paroi intérieure de la cavité réceptrice (2), le récupérateur (4) d'eau comprenant une cavité (13) de récupération d'eau dotée d'une ouverture faisant face à la structure (3) de répartition d'eau, la cavité (13) de récupération d'eau possédant un état de récupération d'eau directement sous la structure (3) de répartition d'eau lorsque le rideau humide (12) n'est pas monté dans la cavité réceptrice (2), et un état de non-récupération d'eau se situant obliquement sous la structure (3) de répartition d'eau lorsque le rideau humide (12) est monté dans la cavité réceptrice (2) .

2. Refroidisseur d'air par évaporation selon la revendication 1, le récupérateur (4) d'eau étant lié de façon pivotante à la paroi intérieure.

3. Refroidisseur d'air par évaporation selon la revendication 2, un centre de gravité du récupérateur (4) d'eau étant situé d'un côté de la cavité (13) de récupération d'eau adjacent au rideau humide (12) ;
le refroidisseur d'air par évaporation comprenant en outre au moins une structure limitatrice qui est placée sur des parois intérieures du boîtier (1) et de la cavité réceptrice (2) et est prévue pour limiter un angle de rotation d'un côté du récupérateur (4) d'eau éloigné du centre de gravité et un angle de rotation du côté centre de gravité du récupérateur (4) d'eau.

4. Refroidisseur d'air par évaporation selon la revendication 2, le centre de gravité du récupérateur (4) d'eau étant situé d'un côté de la cavité (13) de récupération d'eau adjacent au rideau humide (12) ;
le refroidisseur d'air par évaporation comprenant en outre au moins une structure limitatrice qui est placée sur une paroi intérieure du boîtier (1) et est prévue pour limiter un angle de rotation d'un côté du récupérateur (4) d'eau éloigné du centre de gravité.

5. Refroidisseur d'air par évaporation selon la revendication 2, le centre de gravité du récupérateur (4) d'eau étant situé d'un côté de la cavité (13) de récupération d'eau adjacent au rideau humide (12) ;
le refroidisseur d'air par évaporation comprenant en outre au moins une structure limitatrice qui est placée sur une paroi intérieure du boîtier (1) et est prévue pour limiter un angle de rotation du côté centre de gravité du récupérateur (4) d'eau.

6. Refroidisseur d'air par évaporation selon la revendication 2, le centre de gravité du récupérateur (4) d'eau étant situé d'un côté de la cavité (13) de récupération d'eau adjacent au rideau humide (12) ;
le refroidisseur d'air par évaporation comprenant en outre au moins une structure limitatrice qui est placée sur une paroi intérieure de la cavité réceptrice (2) et est prévue pour limiter un angle de rotation d'un côté du récupérateur (4) d'eau éloigné du centre de gravité.

7. Refroidisseur d'air par évaporation selon la revendication 2, le centre de gravité du récupérateur (4) d'eau étant situé d'un côté de la cavité (13) de récupération d'eau adjacent au rideau humide (12) ;
le refroidisseur d'air par évaporation comprenant en outre au moins une structure limitatrice qui est placée sur une paroi intérieure de la cavité réceptrice (2) et est prévue pour limiter un angle de rotation du côté centre de gravité du récupérateur (4) d'eau.

8. Refroidisseur d'air par évaporation selon la revendication 2, les deux extrémités du récupérateur (4) d'eau étant liées de façon pivotante à la paroi intérieure ;
chacun des deux côtés de la paroi intérieure étant muni d'au moins un trou (5) de positionnement ou un arbre de pivotement, et le récupérateur (4) d'eau étant muni d'un arbre (6) de pivotement ou d'un trou de positionnement qui est apparié avec le trou (5) de positionnement ou l'arbre de pivotement et lié à celui-ci ;
l'arbre (6) de pivotement étant placé d'un côté du récupérateur (4) d'eau éloigné du centre de gravité.

9. Refroidisseur d'air par évaporation selon la revendication 8, l'arbre (6) de pivotement sur au moins un côté présentant une structure élastique.

10. Refroidisseur d'air par évaporation selon la revendication 1, le récupérateur (4) d'eau étant lié de façon coulissante à la paroi intérieure ;
une glissière étant placée sur un élément parmi la paroi intérieure et le récupérateur (4) d'eau, et un arbre coulissant qui se déplace le long de la glissière étant placé sur l'autre élément parmi la paroi intérieure et le récupérateur (4) d'eau.

11. Refroidisseur d'air par évaporation selon la revendication 10, comprenant en outre :
un organe élastique, dont une extrémité est placée sur le boîtier (1), et dont l'autre extrémité est liée à un côté du récupérateur (4) d'eau éloigné du rideau humide (12), le récupérateur (4) d'eau se trouvant dans l'état de récupération d'eau lorsque l'organe élastique est dans un état non comprimé ;
une colonne de liaison configurée pour lier l'organe élastique étant placée sur le récupérateur (4) d'eau.

12. Refroidisseur d'air par évaporation selon l'une quelconque des revendications 1 à 11, une partie inférieure de la cavité (13) de récupération d'eau étant munie d'une sortie (8) qui est prévue pour vidanger de l'eau présente dans la cavité (13) de récupération d'eau hors du boîtier (1).

13. Refroidisseur d'air par évaporation selon la revendication 12, comprenant en outre :
une structure de vidange, qui communique avec la sortie (8) et est prévue pour vidanger l'eau hors du boîtier (1) .

14. Refroidisseur d'air par évaporation selon la revendication 13, la structure de vidange étant une rainure (9) de vidange réalisée sur le boîtier (1).

15. Refroidisseur d'air par évaporation selon l'une quelconque des revendications 1 à 11, comprenant en outre : un pare-poussière (11) en liaison complète avec le boîtier (1) et situé au niveau de l'ouverture de la cavité réceptrice (2) de façon adjacente au rideau humide (12).
